# FASCICULE DE BREVET EUROPEEN

(11) **EP 0 524 361 B1**
(45) Date de publication et mention de la délivrance du brevet: **08.02.1995**
(21) Numéro de dépôt: 91402051.6
(22) Date de dépôt: 23.07.1991
(51) Int. Cl.: A01N 43/90

(54) **La Théophylline, produit thérapeutique humain et vétérinaire, proposée comme poison d'ingestion pour éliminer les taupes**
Theophylline, menschliches und tierärzliches therapeutisches Mittel, vorgeschlagen als Nahrungsgiftstoff zur Beseitigung von Maulwürfen
Theophylline, human & veterinary therapeutic agent, proposed as an ingestion poison for eliminating moles

(43) Date de publication de la demande: 27.01.1993
(73) Titulaire: SETRIC INTERNATIONAL S.A., F-31450 Montgiscard (FR)
(72) Inventeur: Chelle, René, SETRIC SA, F-31450 Deyme (FR)

(56) Documents cités:
- DE-A- 305 926
- DE-A- 343 863
- The Merck Index, Eleventh Edition, 1989. Merck & Co., Inc., Rahway, N.J. USA.

## Description

La présente invention se situe dans le domaine de la lutte contre les taupes (Talpa) et concerne l'utilisation de la Théophylline comme poison à utiliser dans les appâts.

Les taupes, mammifères insectivores, du genre Talpa sont extrêmement répandues dans le monde et sont classées dans de nombreux pays, dont la France, dans la catégorie des animaux nuisibles à l'agriculture. Ce sont des animaux fouisseurs, à vie souterraine, ce qui les conduit à creuser des galeries dans l'épaisseur de la terre arable et à évacuer la terre de foisonnement par une cheminée débouchant en surface du sol. La terre évacuée est disposée à l'extérieur, en cône, autour de l'ouverture. Il se constitue ainsi, ce qui est appelé une taupinière. L'existence de taupinières sur un terrain témoigne de la présense, actuelle ou ancienne, de taupes. La longueur des galeries peut être très grande et le nombre de taupinières très élevé. On conçoit, dès lors, que les dégâts causés aux cultures peuvent être très importants, notamment dans les cultures de végétaux à enracinement peu profond.
La présence de taupinières sur les terrains de loisirs ou de sports est disgracieuse et nuit à certaines activités sportives (football, rugby, golf) si on ne prend pas le soin d'araser les taupinières qui se renouvellent d'ailleurs quotidiennement pendant les périodes d'activité des animaux.

Dans la lutte contre les taupes, la part la plus importante revient aux appâts empoisonnés destinés à intoxiquer mortellement les animaux par voie orale. Ces appâts sont placés dans les galeries, de préférence de grand passage. Ils sont constitués de vers de terre fraîchement capturés, le ver de terre représentant la nourriture, presque exclusive, de la taupe dans son biotope. Les essais faits dans le monde avec des appâts de substitution n'ayant pas été jugés suffisamment attrayants, le ver de terre demeure toujours le substrat le plus sûr pour constituer l'appât.

La préparation de l'appât empoisonné est fort simple à réaliser : elle consiste à immerger pendant quelques instants le yer appât dans une solution de poison ou à le saupoudrer de poison si celui-ci se présente sous forme pulvérulente ou finement cristallisée.

Les poisons actuellement utilisés dans les appâts taupicides sont peu nombreux. Pour ce qui concerne la France, où les produits taupicides doivent être homologués par le Ministére de l'Agriculture, seuls deux poisons ont reçu l'agrément des autorités. Ce sont la strychnine (sulfate) et l'alpha chloralose, avec une règlementation d'utilisation très stricte pour la strychnine qui conduit, de fait, à ne pouvoir utiliser que l'alpha chloralose.
Le mode d'action intime de l'alpha chloralose est loin d'être élucidé, la pharmacologie moderne ne s'interessant pas à cette molécule découverte depuis très longtemps mais qui n'a pas trouvé sa place comme médicament.

Nous avons estimé plus rationnel d'utiliser comme poison pour la taupe des overdoses médicamenteuses dont on connaît le mode d'action. Dans le choix à faire parmi les médicaments, nous avons pensé qu'il fallait faire un rapprochement entre les propriétés de la molécule à utiliser et certaines caractéristiques physiologiques dominantes de la taupe. Cet animal présente une très grande activité musculaire qui le conduit à métaboliser (par g de poids vif) une quantité d'aliments énergétiques près de dix fois supérieure à celle d'un mineur de fond du XIX ème siècle travaillant 12 heures par jour avec la pioche et la pelle comme seuls outils d'extraction du charbon. Cette activité musculaire suppose un système cardiovasculaire puissant et parfaitement régulé couplé à un système respiratoire bien adapté pour capter l'oxygène et rejeter le gaz carbonique, sans pour cela exclure une certaine fragilité de ces systèmes.
Nous avons observé, comme d'autres dans le monde, que les taupes mortes naturellement présentent de façon très fréquente des lésions respiratoires, caractérisées par des congestions pulmonaires, accompagnées très souvent d'oedème et d'encombrement trachéobronchique. Nous estimons, que la perméabilité du système alvéolaire pulmonaire à l'oxygène et au gaz carbonique est telle, qu'elle constitue aussi un des points de fragilité de l'animal.
Cela nous a amené à rechercher dans la pharmacopée humaine celui, qui par excés de dose, serait un excellent poison pour la taupe. Nous avons trouvé que la Théophylline remplissait les conditions requises et nous présentons donc pour invention l'utilisation de la Théophylline comme molécule active dans les appâts pour éliminer les taupes.

La Théophylline est une base xanthique qui est présente à l'état naturel et en petites quantités dans les feuilles de thé d'où elle tire sa dénomination. Sa synthèse par voie chimique à partir de la diméthylurée et de l'éthylcyanoacétate est connue depuis 1900. Son utilisation comme médicament remonte à plus de 60 ans. Pendant longtemps elle a été employée chez l'homme et chez les animaux pour son action cardiostimulante et son effet diurétique. La médecine moderne utilise la Théophylline dans des cas pathologiques beaucoup plus précis, essentiellement pour améliorer la ventilation pulmonaire chez les patients souffrant de rétrécissements trachéo-bronchiques dûs à des spasmes des fibres musculaires lisses de ces voies aériennes. La revue "The American Journal of Medecine Vol.88 juin 1990" rapporte qu'environ 20 Millions d'Américains souffrant de "chronic airflow obstructions" utilisent des préparations à la Théophylline, celles-ci étant particulièrement efficaces comme relaxant des fibres lisses.
Il est pratiquement impossible qu'un médicament soit utilisé à une aussi grande échelle sans que se produisent des cas d'intoxications par overdoses dues à des erreurs de prescriptions médicales ou résultant d'intoxications volontaires . Le Docteur CURTIS.N.SESSLER M.D de Richmond donne des informations sur 166 cas d'intoxications humaines. La symptomatologie décrite pour les cas d'intoxications les plus graves, dans les phases terminales, est pour la plus grande part représentée par des troubles de l'équilibre acidobasique par acidose ou alcalose respiratoire, des anomalies cardiovasculaires : tachycardie - hypotension - fibrillations cardiaques, par de l'incoordination musculaire.
Les observations faites sur les taupes intoxiquées à la Théophylline permettent d'observer avant la mort, qui se produit au bout de 1 à 2 heures après l'ingestion, des symptômes qui présentent une forte analogie avec ceux rapportés chez l'homme.
La séquence relevée est la suivante : excitation motrice, accelération respiratoire, incoordination motrice, vasodilatation périphérique très marquée (doigts - groin), symptômes asphyxiques, anomalies cardiaques, décubitus, en général, dorsal, contractions désordonnées des membres et mort.
L'autopsie fait apparaître : une congestion pulmonaire très marquée, un encombrement des voies aériennes, une vasodilatation périphérique avec hypercapnie du sang résiduel.

La quantité de Théophylline qui doit être absorbée pour conduire à la mort est variable selon les individus et il faut tenir compte de la part de poison non ingérée qui est importante, du fait de la préparation de l'appât. On prépare l'appât en saupoudrant le ver de terre fraîchement capturé avec environ 300 mg de Théophylline pour 3 g de vers. Une partie du poison ainsi utilisée est inévitablement perdue parce qu'elle se décroche des téguments du ver ou parce que les taupes l'éliminent par leur façon même d'ingérer l'appât.

Bien qu'en l'état actuel, il n'existe pas d'appât efficace autre que le ver de terre, on ne peut exclure, pour l'avenir, l'hypothèse de la mise au point d'un appât attractif, différent de celui constitué par le ver de terre.
Nous présentons donc aussi pour invention l'utilisation de la Théophylline comme poison pour éliminer les taupes, dans les appâts constitués de vers de terre ou ayant une composition différente.

## Revendications

1. Utilisation de la Théophylline, autre que celle qui est faite en thérapeutique humaine et animale, caractérisée par le fait que la Théophylline est proposée comme poison pour éliminer les taupes.

2. Utilisation de la Théophylline, selon revendication 1, caractérisée par le fait que la Théophylline est présentée dans des appâts constitués de vers de terre ou de tous autres constituants.

## Claims

1. Use of the Theophylin, another than the one that is done in human and animal therapeutic characterised by the fact that the Theophylin is suggested as a poison to kill the moles.

2. Use of the Theophylin according the claim number 1., characterised by the fact that the Theophylin is presented in baits of worms or any other materials.

## Patentansprüche

1. Verwendung von Theophyllin, das anderer Art ist als das zur Behandlung von Mensch und Tier erzeugte, und dadurch **gekennzeichnet ist**, daß das Theophyllin als Giftstoff zur Maulwurfsbekämpfung angeboten wird.

2. Verwendung von Theophyllin nach Anspruch 1, dadurch **gekennzeichnet**, daß das Theophyllin in Angelködern enthalten ist, die aus Regenwürmern oder anderen Bestandteilen bestehen.
